# DEMANDE DE BREVET EUROPEEN

(11) **EP 4 021 054 A1**
(43) Date de publication de la demande: **29.06.2022**
(21) Numéro de dépôt: 21216727.4
(22) Date de dépôt: 22.12.2021
(51) Int. Cl.: H04W 16/18, H04W 16/20, H04W 24/02

(54) **PROCEDE DE CONFIGURATION D'UNE PLURALITE DE DISPOSITIFS POINT D'ACCES SANS FIL ET DISPOSITIF DE CONFIGURATION ASSOCIE**

(30) Priorité: 23.12.2020 FR 2014071
(71) Demandeur: SAGEMCOM BROADBAND SAS, 92500 Rueil-Malmaison (FR)
(72) Inventeur: REUCHE, Anthony, 92500 RUEIL MALMAISON (FR)
(74) Mandataire: Cabinet Le Guen Maillet

(57) **Abrégé**

L'invention concerne un procédé de configuration d'une pluralité de dispositifs point d'accès sans fil, exécuté par un dispositif de configuration, dans un réseau de communication, le procédé comprenant : collecter des premières informations représentatives de capacités d'utilisation des dispositifs point d'accès sans fil ; collecter des deuxièmes informations représentatives de l'utilisation ou de capacités d'utilisation de dispositifs électroniques connectés à l'un ou plusieurs des dispositifs point d'accès sans fil ; collecter des troisièmes informations représentatives d'une utilisation, par au moins un dispositif point d'accès sans fil extérieur au réseau de communication, d'un canal de communication utilisable par l'un au moins des dispositifs point d'accès sans fil ; considérer une pluralité de scénarios de configuration correspondant chacun à une combinaison de bande fréquentielle et de largeur de bande ; établir un score théorique de performance pour chacun des scénarios considérés, le score étant établi au moins au regard desdites premières, deuxièmes et troisièmes informations et configurer les dispositifs point d'accès sans fil de la pluralité de dispositifs point d'accès sans fil conformément au scénario de configuration présentant le meilleur score de performance.

## Description

### DOMAINE TECHNIQUE

La présente invention se rapporte aux réseaux de communication offrant à des dispositifs électroniques des connexions sans fil via des dispositifs point d'accès sans fil. La présente invention concerne plus particulièrement la configuration d'une pluralité de dispositifs point d'accès sans fil d'un même réseau.

### ETAT DE LA TECHNIQUE ANTERIEURE

Les communications sans fil se sont beaucoup développées et la plupart des dispositifs électroniques sont aujourd'hui connectés à un réseau, ou interconnectés, par l'intermédiaire de dispositifs de type point d'accès sans fil. La densité de dispositifs point d'accès sans fil peut se montrer élevée dans un réseau donné ou pour une zone géographique déterminée. C'est par exemple souvent le cas dans des zones résidentielles. De nombreux dispositifs point d'accès sans fil, voisins les uns des autres, opèrent souvent dans de mêmes bandes fréquentielles, voire en utilisant les mêmes canaux de communication, ce qui est de nature à réduire sensiblement les performances des communications opérées par ces dispositifs. De plus, des dispositifs point d'accès sans fil récents peuvent opérer dans différentes largeurs de bande fréquentielle pour un canal de communication, telles que 20 MHz, 40 MHz, 80 Mhz ou 160 MHz, par exemple. Cela a également une incidence possible sur les performances des communications opérées. La situation peut être améliorée.

### EXPOSE DE L'INVENTION

L'invention a pour but de proposer une méthode de configuration mutualisée et améliorée d'un ensemble de dispositifs point d'accès sans fil d'un réseau de communication, la méthode comprenant notamment une analyse détaillée de l'ensemble des ressources radio et un réagencement de ces ressources.

A cet effet, il est proposé un procédé de configuration d'une pluralité de dispositifs point d'accès sans fil, exécuté par un dispositif de configuration, dans un réseau de communication, le procédé comprenant :
- collecter des premières informations représentatives de capacités d'utilisation des dispositifs point d'accès sans fil,
- collecter des deuxièmes informations représentatives de l'utilisation ou de capacités d'utilisation de dispositifs électroniques connectés à l'un ou plusieurs des dispositifs point d'accès sans fil,
- collecter des troisièmes informations représentatives d'une utilisation, par au moins un dispositif point d'accès sans fil extérieur au réseau de communication, d'un canal de communication utilisable par l'un au moins des dispositifs point d'accès sans fil,
- considérer une pluralité de scénarios de configuration, chacun des scénarios de configuration correspondant à une sélection, pour chacun des dispositifs point d'accès sans fil, d'une combinaison de bande fréquentielle et d'une largeur de bande fréquentielle,
- établir un score théorique de performance pour chacun desdits scénarios de configuration considérés, le score étant établi au moins au regard desdites premières, deuxièmes et troisièmes informations et,
- configurer les dispositifs point d'accès sans fil de la pluralité de dispositifs point d'accès sans fil conformément au scénario de configuration présentant le meilleur score de performance.

Le procédé selon l'invention peut également comporter les caractéristiques suivantes, considérées seules ou en combinaison :
- Le procédé de configuration de la pluralité de dispositifs point d'accès sans fil comprend en outre :
   déterminer, pour chacun des dispositifs point d'accès sans fil de la pluralité de dispositifs point d'accès sans fil, un ou plusieurs indicateurs intermédiaires à partir de tout ou partie des premières, deuxièmes et troisièmes informations collectées, et dans lequel établir un score théorique de performance pour chacun desdits scénarios de configuration considérés tient compte d'au moins un indicateur intermédiaire.
- Le ou les premiers indicateurs intermédiaires sont dans la liste suivante : un indice de préférence de canal de communication, un taux d'occupation de canal de communication, un indice de priorité d'utilisation d'un dispositif point d'accès sans fil.
- L'étape visant à considérer une pluralité de scénarios comprend une sélection d'un canal de communication, laquelle sélection d'un canal de communication comprend sélectionner un canal de communication primaire présentant un indice de préférence le plus élevé parmi une pluralité de canaux présentant un taux d'occupation le plus faible.
- Un taux d'occupation théorique est défini en utilisant des pondérations différentes selon que deux dispositifs point d'accès à portée l'un de l'autre partagent ou non un même canal de communication primaire.

L'invention concerne également un dispositif de configuration d'une pluralité de dispositifs point d'accès sans fil, dans un réseau de communication, le dispositif de configuration comprenant :
- un module de collecte de premières informations représentatives de capacités d'utilisation des dispositifs point d'accès sans fil,
- un module de collecte de deuxièmes informations représentatives de l'utilisation ou de capacités d'utilisation de dispositifs électroniques connectés à l'un ou plusieurs des dispositifs point d'accès sans fil,
- un module de collecte de troisièmes informations représentatives d'une utilisation, par au moins un dispositif point d'accès sans fil extérieur au réseau de communication, d'un canal de communication utilisable par l'un au moins des dispositifs point d'accès sans fil,
- un module pour comparer une pluralité de scénarios de configuration, chacun des scénarios de configuration correspondant à une sélection, pour chacun des dispositifs point d'accès sans fil, d'une combinaison de bande fréquentielle et d'une largeur de bande fréquentielle, et pour,
- établir un score théorique de performance pour chacun desdits scénarios de configuration considérés, le score étant établi au moins au regard desdites premières, deuxièmes et troisièmes informations et,
- un module pour configurer les dispositifs point d'accès sans fil de la pluralité de dispositifs point d'accès sans fil conformément au scénario de configuration présentant le meilleur score de performance.

L'invention concerne aussi un équipement de communication de type passerelle réseau ou un serveur distant, de type serveur dit « *cloud* » comprenant un dispositif de configuration selon la revendication précédente.

Enfin, l'invention a pour objet un produit programme d'ordinateur comprenant des instructions de codes de programme pour exécuter les étapes du procédé précité, lorsque le programme est exécuté par un processeur, ainsi qu'un dispositif support de stockage d'informations comprenant un tel produit programme d'ordinateur.

Avantageusement le produit programme d'ordinateur implémente un procédé qui comprend un indice de parcours d'une pluralité de scénarios, lequel indice utilise un codage hexadécimal d'un nombre de canaux de communication parcourus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication dans lequel est mis en œuvre un procédé de configuration d'une pluralité de dispositifs point d'accès sans fil, selon un mode de réalisation de l'invention ;
[Fig. 2] illustre schématiquement une variante d'implémentation du réseau de communication déjà représenté sur la Fig.1 ;
[Fig. 3] est un ordinogramme représentant des étapes du procédé de configuration de la pluralité de dispositifs point d'accès sans fil ;
[Fig. 4] est un ordinogramme représentant une variante du procédé de configuration déjà illustré sur la Fig.3 ;
[Fig. 5] est un diagramme de principe représentant une architecture interne d'un dispositif de configuration pour exécuter un procédé de configuration d'une pluralité de dispositifs point d'accès sans fil, tel qu'illustré sur les Fig.3 et Fig. 4, selon un mode de réalisation.
[Fig. 6] est une illustration d'un espace fréquentiel (médium physique) utilisable par des dispositifs point d'accès sans fil du réseau représentés sur la Fig.1, configurés selon un premier exemple de scénario de configuration ;
[Fig. 7] est un deuxième exemple de scénario de configuration de dispositifs point d'accès sans fil du réseau représentés sur la Fig.1 ;
[Fig. 8] est un troisième exemple de scénario de configuration de dispositifs point d'accès sans fil du réseau représentés sur la Fig.1 ;
[Fig. 9] est un exemple de table de comparaison de taux théoriques d'occupation de canaux pour évaluer un scénario de configuration de dispositifs point d'accès sans fil ; et,
[Fig. 10] est une illustration de la bande fréquentielle dite « bande 5 GHz » dont des canaux sont utilisables pour des communications sans fil selon des modes de réalisation.

### EXPOSE DETAILLE DE MODES DE REALISATION

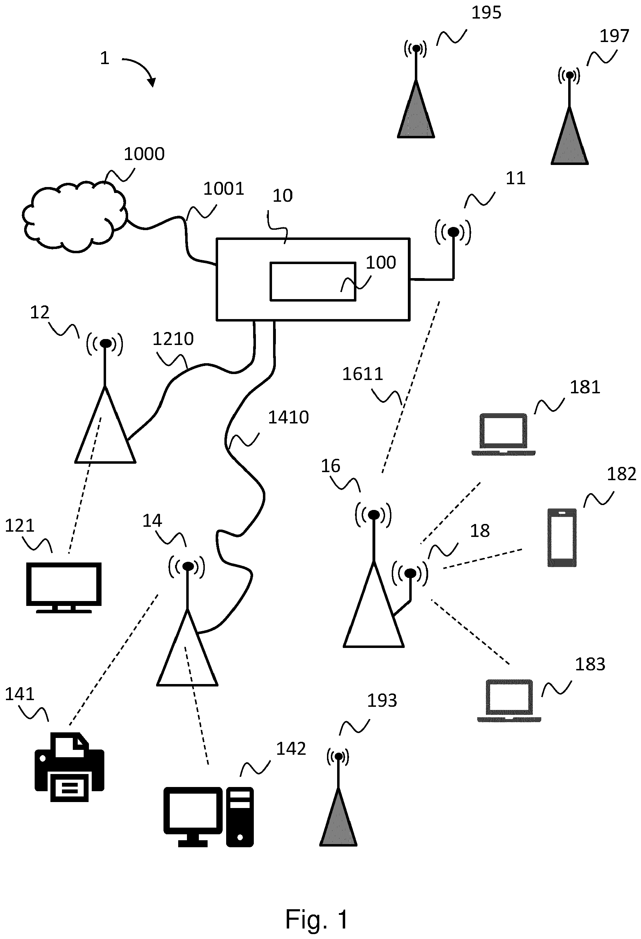

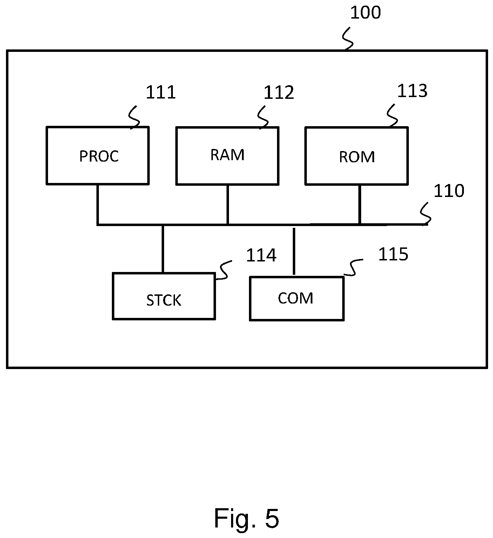

La **Fig. 1** illustre schématiquement un réseau local l de communication. Le réseau local 1 est par exemple un réseau local domestique qui comprend un équipement passerelle réseau 10, typiquement de type passerelle réseau résidentielle. La passerelle réseau 10 est configurée pour la connexion du réseau local 1 à un réseau étendu 1000, par l'intermédiaire d'un lien de connexion 1001. Le réseau étendu 1000 est un réseau de type WAN (de l'anglais « *Wide Area Network* »). Selon un mode de réalisation de l'invention, le réseau étendu 1000 est le réseau *internet.* Le lien de connexion 1001 peut être implémenté sous la forme d'une ligne d'abonné au téléphone, et la connexion utilise par exemple une technologie ADSL (sigle anglais pour « *Asymmetric Digital Subscriber Line* » et qui signifie « ligne d'abonné numérique et asymétrique »), une connexion de type fibre optique ou encore une liaison sans-fil de type accès sans-fil fixe ou « *fixed wireless access* » reposant sur des technologies d'accès 4G et/ou 5G par exemple. Ces exemples n'étant pas limitatifs. Des dispositifs électroniques 121, 141, 142, 181, 182 et 183, de différents types, sont configurés pour être connectés au réseau local 1 par l'intermédiaire de la passerelle réseau 10. Ainsi, le dispositif électronique 121, de type téléviseur haute-définition est connecté à la passerelle réseau 10 via un dispositif point d'accès sans fil 12, lui-même connecté à la passerelle réseau 10 via une connexion filaire 1210. Le dispositif électronique 141 est une imprimante dont une liaison de données et de contrôle est connectée au réseau local 1 par l'intermédiaire d'un dispositif point d'accès sans fil 14, lequel est connecté à la passerelle réseau 10 via une liaison filaire 1410. Les liaisons filaires 1210 et 1410 sont par exemple du type *Ethernet.* Un dispositif électronique 142, de type ordinateur fixe, est également connecté à la passerelle réseau 10 par l'intermédiaire du dispositif point d'accès sans fil 14. Les dispositifs électroniques 181, 182 et 183, respectivement de type ordinateur portable (ou *laptop*), téléphone intelligent (ou *smartphone*) et ordinateur portable, sont connectés sans fil à un dispositif point d'accès sans fil 18, lui-même connecté à un dispositif point d'accès sans fil 16 opérant une connexion sans fil 1611 avec la passerelle réseau 10. La connexion sans fil 1611 entre le point d'accès sans fil 16 et la passerelle réseau 10 est réalisée par le biais d'un dispositif point d'accès sans fil 11 embarqué dans la passerelle réseau 10. La connexion entre les dispositifs point d'accès sans fil 16 et 18 est une liaison filaire interne. En effet, les dispositifs point d'accès sans fil 16 et 18 sont compris dans un même et seul équipement de type répéteur sans fil WiFi. Selon un mode de réalisation, tous les dispositifs représentés sont configurés ou configurables pour opérer des communications sans fil selon une norme IEEE 802.11 (a, b, g, n, ac, ax) ou l'une quelconque de ses évolutions. Le dispositif point d'accès sans fil 11 de la passerelle réseau 10 est connecté à un module de communication 115 interne de la passerelle réseau 10 configuré pour des connexions filaires et des connexions sans fil (non représentée sur la figure FIG.1 mais visible sur la Fig.5). Le module de communication 115 contrôle également les interfaces filaires internes de la passerelle réseau 10, et donc en partie les connexions filaires 1210 et 1410.

Les termes « dispositif point d'accès sans fil » sont à interpréter dans la présente description comme se rapportant à une interface radioélectrique de communication, usuellement dénommée *radio.*

La passerelle réseau 10 comprend en outre un dispositif de configuration 100 configuré pour opérer une configuration à distance de tous les dispositifs point d'accès sans fil du réseau local 1, à savoir des dispositifs point d'accès sans fil 11, 12, 14, 16 et 18.

D'autres dispositifs point d'accès sans fil, 193, 195 et 197 sont présents dans l'environnement géographique et électromagnétique (ou radioélectrique) du réseau local 1 et peuvent donc potentiellement utiliser chacun des configurations communes avec un ou plusieurs des dispositifs point d'accès sans fil 11, 12, 14, 16 et 18.

Avantageusement, le dispositif de configuration 100 est adapté pour analyser à intervalles réguliers, sur demande d'un administrateur ou d'un utilisateur, ou encore selon une politique prédéfinie, l'ensemble des dispositifs point d'accès sans fil du réseau local 1, en termes de fonctionnement et d'environnement électromagnétique et de collecter des informations représentatives de ces éléments en vue d'opérer ensuite une reconfiguration globale. Astucieusement, une étape d'évaluation d'une pluralité de scénarios de configuration est réalisée dans laquelle un score (une note) est attribué(e) à chacun des scénarios en fonction de critères prédéterminés. Selon un mode de réalisation de l'invention, tous les scénarios possibles sont considérés. Selon une variante du mode de réalisation, seuls des scénarios présentant un intérêt conséquent en termes de performances sont considérés aux fins de limiter les opérations de calcul.

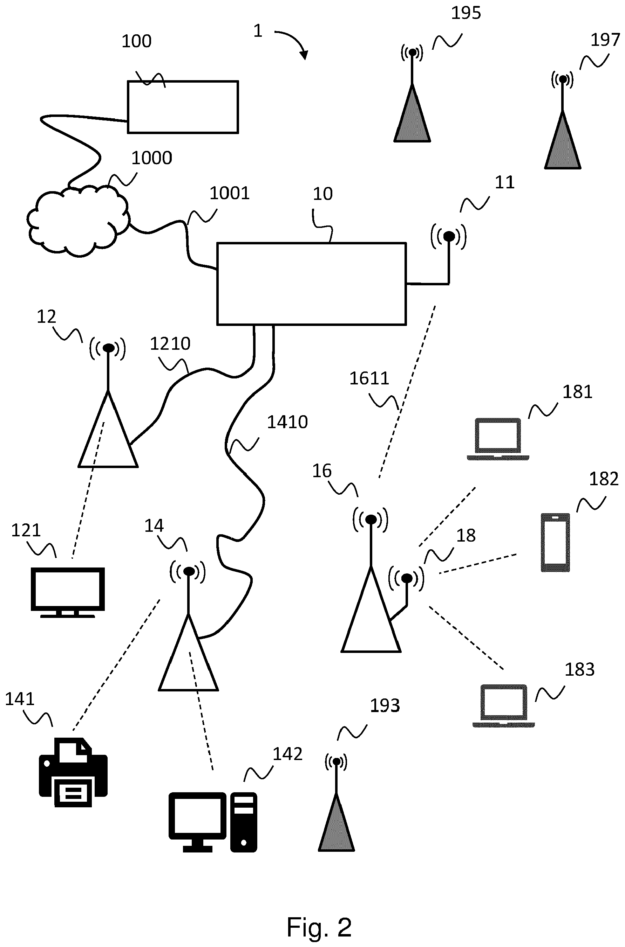

La **Fig. 2** illustre une variante d'implémentation du réseau local 1 connecté au réseau étendu 1000, selon laquelle le dispositif de configuration 100 adapté à la configuration à distance de tout ou partie des dispositifs point d'accès sans fil 11, 12, 14, 16 et 18 est implémenté dans le réseau étendu 1000, offrant une solution dite « *Cloud* ». Selon cette variante, le dispositif de configuration 100 peut être configuré pour opérer, outre une reconfiguration des dispositifs point d'accès sans fil du réseau local 1, une configuration de dispositifs point d'accès sans fil compris dans une pluralité de réseaux locaux similaires au réseau local 1 et interconnectés au réseau étendu 1000 par le biais d'un équipement de type passerelle réseau semblable à la passerelle réseau 10.

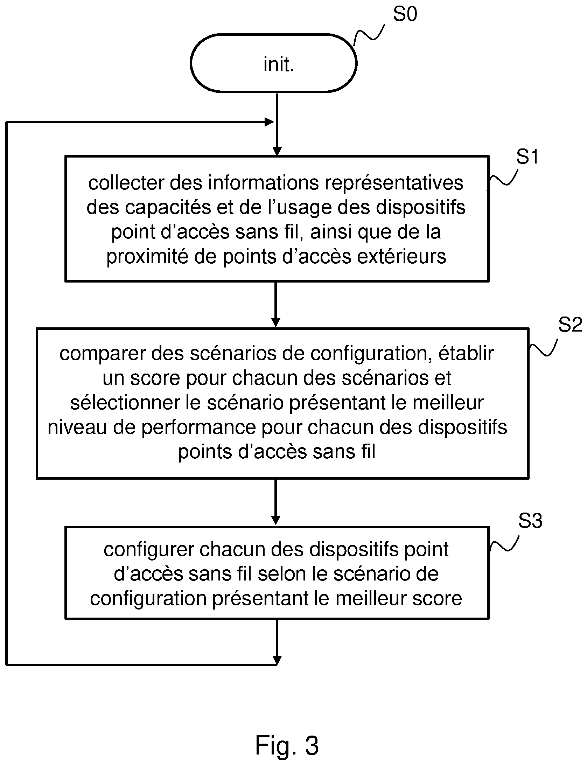

La **Fig. 3** illustre un procédé de configuration ou reconfiguration de dispositifs point d'accès sans fil selon un mode de réalisation de l'invention. Une étape **S0** correspond à un état dans lequel les dispositifs électroniques connectés au réseau local 1 sont opérationnels et configurés pour interagir les uns avec les autres de façon nominale. En particulier, la passerelle réseau 10 est configurée de sorte à permettre aux dispositifs électroniques 121, 141, 142, 181, 182 et 183, de différents types, de se connecter au réseau local 1 de type LAN. En outre, la passerelle réseau 10 est configurée pour connecter le réseau local 1 au réseau étendu 1000, le dispositif de configuration 100, embarqué dans la passerelle réseau 10 ou encore dans un serveur *cloud* distant, est configuré pour offrir des services de configuration optimisée des différents dispositifs point d'accès sans fil 11, 12, 14, 16 et 18. En outre, les dispositifs point d'accès sans fil 11, 12, 14, 16 et 18 sont initialisés et configurés pour offrir des services usuels de connexion au réseau local 1 et pouvoir détecter chacun des informations représentatives de l'environnement électromagnétique dans l'espace autour de lui, à sa portée électromagnétique. Ainsi, l'étape S0 correspond à un fonctionnement nominal du réseau local 1 comprenant les dispositifs précités et opérant en outre des communications depuis et vers le réseau étendu 1000 au travers de la passerelle réseau 10. Lors de cette étape, un procédé de configuration optimisée de la pluralité de dispositifs point d'accès 11, 12, 14, 16 et 18 est initié à la demande d'un utilisateur, d'un administrateur du réseau local 1, ou encore automatiquement et suivant une politique de gestion de la configuration du réseau local 1, et plus particulièrement de la configuration des communications sans fil opérées via les dispositifs points d'accès sans fil 11, 12, 14, 16 et 18.

Une étape **S1** suit immédiatement l'initiation du procédé de configuration optimisée des dispositifs point d'accès sans fil 11, 12, 14, 16 et 18. Cette étape vise à collecter des informations représentatives des capacités et de l'utilisation des dispositifs point d'accès sans fil 11, 12, 14, 16 et 18, ainsi que de la proximité des dispositifs point d'accès sans fil extérieurs 193, 195 et 197, dont la présence est « visible » (ou plus exactement perceptible) depuis l'un quelconque au moins des dispositifs point d'accès sans fil 11, 12, 14, 16 et 18. Ainsi, des premières informations représentatives de capacités d'utilisation des dispositifs point d'accès sans fil sont collectées par le dispositif de configuration 100. Ces informations sont notamment de nature à connaître le ou les standards et protocoles de communication sans fil supportés par chacun des dispositifs point d'accès sans fil. Il s'agit, par exemple, pour un dispositif point d'accès sans fil donné, de pourvoir déterminer si le dispositif est configurable pour opérer dans une bande fréquentielle à 2.4 GHz et/ou dans une bande fréquentielle à 5 GHz, ou encore si le dispositif point d'accès sans fil supporte, par exemple, le standard IEEE 802.11 a, le standard IEEE802.11b, le standard IEEE802.11g, IEEE802.11n, IEEE802.11ac, IEEE802.11ax, ou une quelconque évolution (amendement) de l'un de ces standards. En fonction du ou des standard supportés, il s'agit également de déterminer quelles sont les possibilités de largeur de bande fréquentielle utilisables, c'est-à-dire s'il est possible d'allouer une bande fréquentielle (un canal) de type 20 MHz, 40 MHz, 80 MHz ou encore 160 MHz, par exemple en termes de largeur de bande fréquentielle. Bien évidemment, les premières informations peuvent comprendre d'autres critères, tels que par exemple, la possibilité ou non d'opérer des communications sous une forme chiffrée en utilisant un protocole de chiffrement déterminé aux fins d'opérer des communications sans fil sécurisées. Plus généralement, il s'agit de recenser pour chacun des dispositifs point d'accès sans fil 11, 12, 14, 16 et 18 du réseau local 1, toute possibilité de configuration susceptible d'avoir une incidence sur la performance des communications sans fil opérées via ce dispositif et donc, par voie de conséquence, sur l'ensemble des communications opérées dans le réseau local 1. Ces informations sont obtenues via des échanges protocolaires définis selon des standards d'interopérabilité connus entre une unité de contrôle et un dispositif point d'accès sans fil, ou encore en recourant à des capacités d'échanges entre des dispositifs point d'accès sans fil, au besoin, et toujours selon de tels standards.

D'autres informations, dénommées deuxièmes ou secondes informations, sont collectées par le dispositif de configuration 100 de la passerelle réseau 10, et qui visent à déterminer l'utilisation instantanée ou moyenne de chacun des dispositifs point d'accès sans fil. On entend ici par utilisation moyenne, une utilisation sur une période de temps prédéterminée, telle que, par exemple, le nombre de données ayant transité via un dispositif point d'accès sans fil donné pour une période d'une journée. Il s'agit de déterminer si un flux de données est conséquent sur une branche du réseau local 1, par exemple, est moins conséquent sur une autre branche du réseau 1. Ainsi, il est par exemple avantageusement possible de déterminer si un dispositif point d'accès sans fil du réseau local 1 doit être préférentiellement configuré pour opérer dans un sous-réseau de type *back*-*haul* du réseau local 1 ou dans un sous-réseau de type *ƒront*-*haul* du réseau local 1. On entend ici par sous-réseau *back-haul*, un sous réseau d'acheminement des données jusqu'au sous-réseau *ƒront-haul*, ce dernier étant le sous-réseau de liaison avec des dispositifs « clients », constitué des dispositifs point d'accès situés « au bord » du réseau local 1. En effet, un sous-réseau *back-haul* est assimilable à une « autoroute de données », là où un point d'accès « *front*-*haul* » est comparable à une voie d'accès ou une route de moindre dimension autorisant un trafic moindre. Les deuxièmes informations collectées visent en outre à connaître le type de service principalement mis en œuvre lorsque des données transitent via un dispositif point d'accès sans fil, durablement ou sur une période prédéterminée. Par exemple, un dispositif point d'accès sans fil peut être régulièrement utilisé pour opérer des transferts de données correspondant à un flux vidéo IPTV, tel que par exemple un flux de données RTSP (du sigle anglais « *Real-Time Streaming Protocol* » encapsulé dans une session UDP (du signe anglais « *User Datagram Protocol* ». Un tel service requiert plus de débit, et donc plus de priorité, par exemple, qu'un transfert de données vers une imprimante sans fil utilisée pour l'impression de quelques documents ou quelques pages au cours d'une journée. Il est alors important, par exemple, de pouvoir identifier et dissocier des services habituels transitant via un dispositif point d'accès sans fil tels que des services respectivement et usuellement nommés « données », « voix » ou encore « TV sur IP », ou leurs correspondants en anglais « *data* », « *voice* » et « *IPTV* ». Les deuxièmes informations collectées par le dispositif de configuration permettent ainsi de connaître l'utilisation que font des dispositifs électroniques (encore appelés classiquement *stations*) connectés à tout ou partie des dispositifs point d'accès sans fil 11, 12, 14, 16 et 18 du réseau local 1, des capacités de communications qui leurs sont allouées. Tout comme les premières informations collectées, les deuxièmes informations sont collectées en utilisant des échanges protocolaires définis selon des standards d'interopérabilité connus entre une unité de contrôle et un dispositif point d'accès sans fil, ou encore en recourant à des capacités d'échanges entre des dispositifs point d'accès sans fil, au besoin, et toujours selon de tels standards. Enfin, des troisièmes informations sont collectées par le dispositif de configuration 100 depuis la pluralité de dispositifs point d'accès sans fil 11, 12, 14, 16 et 18, qui visent à identifier tout dispositif tiers de type point d'accès sans fil opérant à portée de l'un ou de plusieurs dispositifs point d'accès sans fil du réseau local 1, et par voie de conséquence susceptibles d'interférer avec les communications opérées dans le réseau local 1 et d'avoir une incidence sur la performance de ces communications. Ces dispositifs point d'accès sans fil tiers sont par exemple les dispositifs point d'accès sans fil 193, 195 et 197 visibles sur la Fig.1 et la Fig. 2 et qui sont rattachés à d'autres réseaux voisins, domestiques ou à usage professionnel. Les troisièmes informations collectées comprennent par exemple des identifiants SSID de réseaux rendus accessibles via ces points d'accès tiers ou encore des identifiants de BSSID associés à ces points d'accès tiers, ou encore des informations permettant de déterminer dans quelle bande fréquentielle et avec quelle largeur de bande opèrent les différents points d'accès tiers 193, 195 et 197 détectés. Bien évidemment, la capacité à opérer des communications selon d'autres paramètres de communication peut également être scrutée et les informations représentatives de bande fréquentielle et de largeur de bande fréquentielle ne sont pas les seules à être déterminées en association avec des points d'accès tiers. Là encore, les troisièmes informations sont collectées à partir des dispositifs point d'accès sans fil via des échanges protocolaires définis selon des standards d'interopérabilité connus entre une unité de contrôle et un dispositif point d'accès sans fil, ou encore en recourant à des capacités d'échanges entre des dispositifs point d'accès sans fil, au besoin, et toujours selon de tels standards. Une fois ces premières, deuxièmes et troisièmes informations collectées, il est possible pour le dispositif de configuration 100 d'affecter des facteurs de pondération à des paramètres de fonctionnement ou d'interopérabilité entre des dispositifs point d'accès sans fil et de déterminer, pour chacun des scénarios possibles de configuration de la pluralité de dispositifs point d'accès sans fil, un score théorique de performance de communications sans-fil. Par exemple, il est possible de définir un facteur de pondération fort à une association d'un point d'accès configuré avec une largeur de bande de 160 MHz lorsqu'il est prévu pour communiquer avec une station, elle aussi susceptible d'opérer des communications avec une largeur de bande de 160 MHz. A contrario, il est possible de définir un facteur de pondération faible lorsqu'un point d'accès sans fil est capable d'opérer des communications avec une largeur de bande à 160 MHz mais que 90% des communications opérées par ce point d'accès sans fil servent à transmettre des informations à une station configurable uniquement avec une largeur de bande de 20 MHz.

Selon un mode de réalisation, tous les scénarios envisageables évalués sont notés lors d'une étape **S2**, aux fins d'être comparés au regard de facteurs de pondération prédéterminés. Selon une variante, et aux fins d'économiser du temps et de la puissance de calcul, seuls des scénarios faisant du sens sont évalués, et des critères peuvent être établis pour dissocier des scénarios faisant du sens de ceux n'en faisant que peu ou pas. Chacune des possibilités de scénarios est définie par une combinaison d'un choix de bande fréquentielle et de largeur de bande fréquentielle pour un dispositif point d'accès sans fil donné de la pluralité de dispositifs point d'accès sans fil, les scénarios étant considérés au regard de facteurs de pondération prédéterminés.

A titre d'exemple, un premier scénario *scénario-1* correspond aux combinaisons suivantes :
- le dispositif point d'accès sans fil 11 est configuré pour opérer en bande fréquentielle U-NII-2a avec une largeur de 80 Mhz,
- le dispositif point d'accès sans fil 12 est configuré pour opérer en bande fréquentielle U-NII-2a avec une largeur de 20 Mhz,
- le dispositif point d'accès sans fil 14 est configuré pour opérer en bande fréquentielle U-NII-2c avec une largeur de 40 Mhz,
- le dispositif point d'accès sans fil 16 est configuré pour opérer en bande fréquentielle U-NII-2c avec une largeur de 80 Mhz,
- le dispositif point d'accès sans fil 18 est configuré pour opérer en bande fréquentielle U-NII-2a avec une largeur de 40 Mhz,

A titre d'exemple, un premier scénario *scénario*-2 correspond aux combinaisons suivantes :
- le dispositif point d'accès sans fil 11 est configuré pour opérer en bande fréquentielle U-NII-2a avec une largeur de 80 Mhz,
- le dispositif point d'accès sans fil 12 est configuré pour opérer en bande fréquentielle U-NII-2a avec une largeur de 40 Mhz,
- le dispositif point d'accès sans fil 14 est configuré pour opérer en bande fréquentielle U-NII-2c avec une largeur de 40 Mhz,
- le dispositif point d'accès sans fil 16 est configuré pour opérer en bande fréquentielle U-NII-2c avec une largeur de 80 Mhz,
- le dispositif point d'accès sans fil 18 est configuré pour opérer en bande fréquentielle U-NII-2a avec une largeur de 80 Mhz.

Ce qui revient à dire que seuls les paramètres de largeur de bande des dispositifs point d'accès sans fil 12 et 18 varient entre les scénarios *scénario-1* et *scénario-2.*

La bande U-NII ou encore UNII (de l'acronyme anglais « *Unlicensed National Information Infrastructure* ») est une portion du spectre radiofréquences utilisée par les dispositifs et procédés compatibles avec la norme IEEE 802.11 ainsi que d'autres dispositifs de communication sans fil. Elle comprend une pluralité de sous-bandes dénommées U-NII-1, U-NII-2a, U-NII-2c, U-NII-2e U-NII-3 et U-NII-4.

A titre d'exemple, un facteur de pondération permettant de moduler un score d'un scénario peut être la similitude ou un niveau d'adéquation entre un choix de largeur de bande fréquentielle d'une part, et la bande fréquentielle maximale configurable d'autre part, pour chacun des dispositifs point d'accès sans fil. Un autre exemple de facteur de pondération permettant de moduler un score d'un scénario donné est un niveau d'adéquation entre une largeur de bande fréquentielle élevée et un type de service parmi le transport de données, le transport de voix, ou le transport de vidéo. Par exemple, une largeur de bande fréquentielle de 160 MHz pour un service de type « IP-TV » aboutit à un facteur de pondération élevé là où une largeur de bande fréquentielle de 160 MHz pour un usage de type « données » occasionnel aboutit à un facteur de pondération faible. Selon un autre exemple encore, un choix d'une même bande fréquentielle pour deux dispositifs point d'accès sans fil voisins entraîne un facteur de pondération faible là où un choix de bandes fréquentielles disjointes entraîne un facteur de pondération fort pour un scénario donné. Selon un autre exemple encore, une largeur de bande fréquentielle importante pour un dispositif point d'accès sans fil présentant un nombre habituel élevé de stations connectées conduit à un facteur de pondération fort, là où une largeur de bande fréquentielle faible pour un nombre élevé de stations habituellement connectées conduit à un facteur de pondération faible. Ces exemples étant décrits dans l'hypothèse où un score plus élevé du fait de facteurs de pondération plus élevés correspond à des performances de communications accrues. Bien évidemment ces exemples ne sont pas limitatifs et l'homme du métier saura imaginer bon nombre de facteurs de pondération prédéterminés ou encore modulables en fonction du temps et de l'évolution de l'architecture d'un réseau local comprenant un dispositif de configuration tel que le dispositif de configuration 100 mettant en œuvre le procédé selon des modes de réalisation. L'essentiel étant de pouvoir établir des scores faisant du sens au regard de critères de performances et de pouvoir établir une discrimination entre tous les scénarios possibles, ou encore entre tous les scénarios considérés dans la mesure où leurs évaluations respectives ont du sens.

Selon un mode de réalisation, pour chacune des combinaisons de choix de bande fréquentielle et de largeur de bande fréquentielle, d'éventuels scénarios (ou sous-scénarios) plus détaillés visant à considérer un choix de canal primaire et de canal ou canaux secondaires ne sont pas analysés. Ainsi, et pour un dispositif point d'accès sans fil donné dans un scénario donné, une combinaison d'une sélection de bande fréquentielle et de largeur de bande fréquentielle n'est considérée qu'après détermination d'un canal primaire offrant le plus grand niveau de performances pour ce dispositif point d'accès donné dans ce scénario donné, au regard des configurations respectives des autres dispositifs point d'accès sans fil du réseau local 1, selon ce scénario, et notamment au regard du canal primaire sélectionné, et du canal ou des canaux secondaires qui découlent de la sélection d'un canal primaire.

Ainsi, pour un dispositif offrant des possibilités de configuration de largeur de bande fréquentielle supérieure à la largeur d'un canal « élémentaire » de 20 Mhz, un choix de canal primaire et d'un ou plusieurs canaux secondaires est réalisé au moment d'opérer une sélection de canal. Il est connu que deux dispositifs point d'accès sans fil voisins et positionnés chacun dans un environnement à la portée électromagnétique de l'autre présenteront de bien meilleures performances de communication dès lors qu'ils ont opéré une sélection de canal primaire en commun. En effet, deux dispositifs point d'accès sans fil voisins peuvent communiquer entre eux par le biais d'un canal primaire commun pour optimiser les communications opérées par chacun d'entre eux. Cette possibilité n'existe pas quand ils opèrent dans une même bande fréquentielle mais qu'ils ont sélectionné des canaux primaires distincts.

Selon une variante du mode de réalisation, chacun des scénarios envisagés correspond non plus seulement à un choix de bande fréquentielle et de largeur de bande fréquentielle, mais à une combinaison de ces deux caractéristiques (ou paramètres) auxquelles s'ajoute le choix d'un canal primaire, le cas échéant. Cette variante requiert cependant des ressources de calcul supplémentaires, sauf à envisager un temps de traitement plus long pour la sélection d'un scénario de configuration optimisée par le dispositif de configuration 100.

Enfin, après détermination du meilleur score de scénario de configuration, les dispositifs point d'accès sans fil sont chacun configurés lors d'une étape S3 conformément aux paramètres de configuration établis selon le scénario présentant ce meilleur score. Selon un mode de réalisation, le scénario le plus performant présente le score le plus élevé. Selon une variante, le score le moins élevé correspond au scénario le plus performant.

Un exemple de facteur de pondération permettant d'aboutir à des scores variés pour et selon des scénarios considérés est par exemple un degré de priorité AP_{PRIORITY} défini en termes de capacités de communication, soit en d'autres termes un niveau de bande passante à allouer à un dispositif point d'accès sans fil pour opérer des communications. Un tel facteur de priorisation AP_{PRIORITY} peut, par exemple, être défini pour chacun des dispositifs point d'accès sans fil 11, 12, 14, 16 et 18, à partir de trois paramètres différents qui sont : un niveau de trafic AP_{TRAFFIC} observé à travers un dispositif point d'accès sans fil, un type de service principal AP_{SERVICE} parmi les données, la voix et la vidéo, ainsi qu'un niveau moyen de performances maximales AP_{STA} des stations connectées à ce dispositif point d'accès sans fil.

S'agissant du facteur AP_{TRAFFIC}, il est possible de calculer, par exemple, une moyenne médiane, pour les 24 dernières heures, d'un taux d'occupation par heure du média physique en lien avec les paramètres de configuration radio utilisés.

S'agissant du facteur AP_{SERVICE}, un coefficient de préférence de service peut être attribué à chacun des types de service définis. Par exemple, un service de données peut être associé à un coefficient égal à 1, un service de type de transport de voix peut être associé à un coefficient égal à 2 et un service de transport de vidéo peut être associé à un coefficient égal à 3 et un service de type *backhaul* (acheminement de tout type de données vers un *ƒronthaul*) peut être associé à un coefficient égal à 4.

S'agissant du facteur AP_{STA}, il permet de privilégier, par exemple, des dispositifs point d'accès étant connectés à des stations compatibles avec un standard de communication IEEE 802.11ac par rapport à des dispositifs point d'accès sans fil étant connectés à des stations compatibles avec un standard de communication IEEE 802.11n ou encore un standard de communication IEEE 802.11b. Pour cela, il est par exemple possible de calculer une double moyenne médiane sur les dernières 24 heures de types de stations connectées en appliquant un coefficient de préférence défini de sorte que le coefficient soit égal à 1 pour une station de type IEEE 802.11b, soit égal à 2 pour une station de type IEEE 802.11n, soit égal à 3 pour une station de type IEEE802.11ac et soit égal à 4 pour une station de type IEEE 802.11ax.

Enfin, il est possible d'établir un facteur de pondération AP_{PRIORITY} représentatif d'un niveau de priorité à attribuer en termes de bande passante en fonction des trois facteurs AP_{TRAFFIC}, AP_{SERVICE} et AP_{STA}, en les pondérant, par exemple avec des coefficients respectifs C_{TRAFFIC}, C_{SERVICE} et C_{STA} de sorte que le niveau de priorité de chacun des dispositifs point d'accès sans fil soit compris entre 0 et une valeur maximale (1, par exemple) et que chacun des facteurs AP_{TRAFFIC}, AP_{SERVICE} et AP_{STA} représente un pourcentage du facteur final AP_{PRIORITY}.

Finalement, un score de performance de scénario est déterminé à partir de critères prédéterminés et des facteurs de pondération définis.

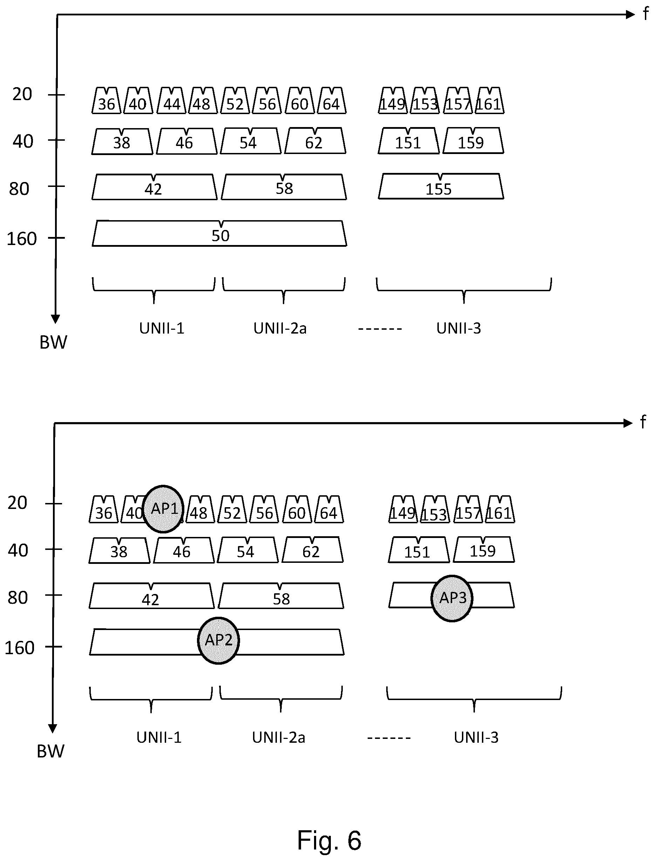

La **Fig. 6** a vocation à faciliter la compréhension de la définition de tous les scénarios de configuration possibles pour la pluralité de dispositifs point d'accès sans fil dans un espace fréquentiel prédéterminé, et considérant que chacun des scénarios correspond à une configuration de chacun des dispositifs point d'accès sans fil du réseau local 1 selon une combinaison d'une bande fréquentielle sélectionnée (canal) et d'une largeur de bande fréquentielle sélectionnée. Ainsi la partie supérieure de la Fig. 6 illustre un espace fréquentiel comprenant quatre bandes fréquentielles successives UNII-1, UNII-2a et UNII-3 (parfois appelées « sous-bandes »). L'espace fréquentiel représenté sur cette figure est délibérément limité aux fins de simplifier la présente description des scénarios à considérer. L'axe des abscisses représente les bandes fréquentielles (ou canaux) sur lesquelles les communications peuvent être opérées grâce aux dispositifs point d'accès sans fil 11, 12, 14, 16 et 18 ainsi que les dispositifs point d'accès sans fil tiers 193, 195 et 197. L'axe des ordonnées représente une largeur de bande fréquentielle croissante décomposée en 4 valeurs discrètes que sont 20 MHz, 40 Mhz, 80 MHz et 160 Mhz, également dénommée largeur de canal.

Des bandes fréquentielles de communications dites « élémentaires » sont définies pour une largeur de bande fréquentielle de 20 Mhz. Ces bandes fréquentielles sont dénommées respectivement canal 36, canal 40, canal 44, canal 48 en bande fréquentielle UNII-1, puis canal 52, canal 56, canal 60 et canal 64 en bande fréquentielle UNII-2a, canal 149, canal 153, canal 157 et canal 161 en bande fréquentielle UNII-3.

Dans une configuration où la largeur de bande fréquentielle est égale à 40 Mhz, les bandes fréquentielles sont respectivement nommées canal 38 et canal 46, en bande fréquentielle UNII-1, puis canal 54 et canal 62 en bande fréquentielle UNII-2a, canal 151 et canal 159 en bande fréquentielle UNII-3, et ainsi de suite, pour finir avec la bande fréquentielle nommée canal 50 pour les bandes fréquentielles UNII-1 et UNII-2a. Bien évidemment, les bandes fréquentielles représentées sur la Fig.6 ne sont pas les seules utilisables et utilisées dans les différents modes de réalisations, la représentation des bandes fréquentielles choisie ici, sur la Fig. 6, étant volontairement limitée pour des raisons de lisibilité de la Fig.6. On peut noter que chaque bande fréquentielle est nommée selon le canal correspondant à sa fréquence centrale telle que définie sur l'axe des fréquences (en abscisse). Ainsi, chaque combinaison de bande fréquentielle et largeur de bande fréquentielle sélectionnée pour un dispositif point d'accès déterminé revient à configurer ce dispositif pour opérer des communications dans l'une des bandes fréquentielles (canaux) telles que précédemment identifiées et définies (canal 36, canal 40, canal 44, .... canal 38, canal 46, canal 54, .... canal 42, canal 58, canal 155, canal 50.

Le procédé selon l'invention ne se limite pas aux seules bandes fréquentielles citées ci-avant, mais s'applique pour n'importe quel espace fréquentiel compatible avec les possibilités de configuration et d'opération des dispositifs point d'accès sans fil. La partie inférieure de la Fig. 6 illustre alors un scénario de configuration appliqué à trois dispositifs point d'accès sans fil AP1, AP2 et AP3. Le positionnement d'un cercle symbolisant un dispositif point d'accès correspond à une combinaison d'une sélection d'une bande fréquentielle et d'une sélection d'une largeur de bande fréquentielle. Ainsi, selon l'exemple décrit en partie inférieure de la Fig.6, le dispositif point d'accès sans fil AP1 opère en bande fréquentielle 44 (ou canal 44), avec une largeur de bande de 20 Mhz ; le dispositif point d'accès sans fil AP2 opère en bande fréquentielle 50 (ou canal 50), avec une largeur de bande de 160 Mhz ; et le dispositif point d'accès sans fil AP3 opère en bande fréquentielle 155 (ou canal 155), avec une largeur de bande de 80 Mhz.

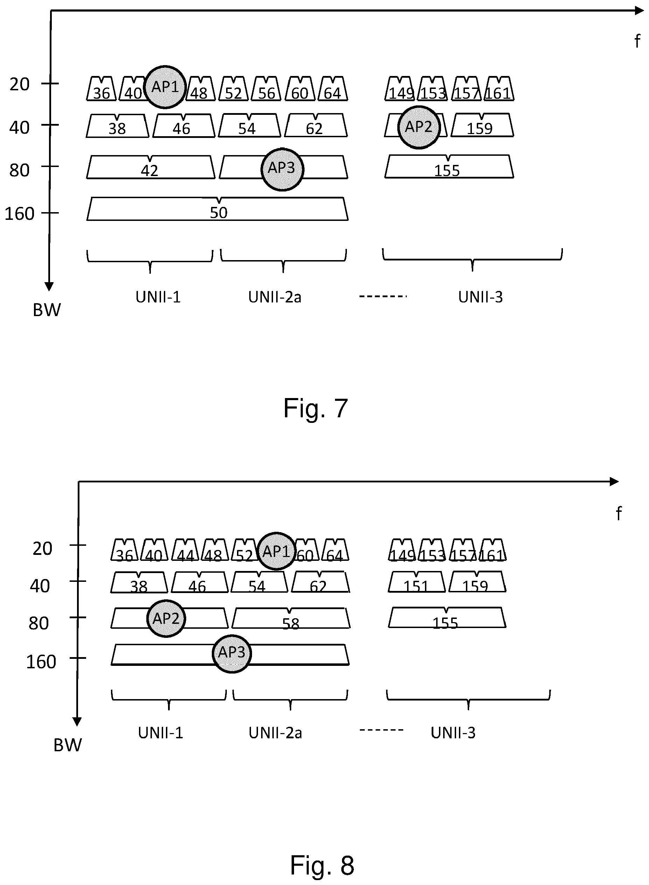

Selon un deuxième exemple de scénario décrit sur la Fig. 7, le dispositif point d'accès sans fil AP1 opère en bande fréquentielle 44 (ou canal 44), avec une largeur de bande de 20 Mhz ; le dispositif point d'accès sans fil AP2 opère en bande fréquentielle 151 (ou canal 151), avec une largeur de bande de 40 Mhz ; et le dispositif point d'accès sans fil AP3 opère en bande fréquentielle 58 (ou canal 58), avec une largeur de bande de 80 Mhz.

Enfin, selon un troisième exemple de scénario décrit sur la Fig. 8, le dispositif point d'accès sans fil AP1 opère en bande fréquentielle 56 (ou canal 56), avec une largeur de bande de 20 Mhz ; le dispositif point d'accès sans fil AP2 opère en bande fréquentielle 42 (ou canal 42), avec une largeur de bande de 80 Mhz ; et le dispositif point d'accès sans fil AP3 opère en bande fréquentielle 50 (ou canal 50), avec une largeur de bande de 160 Mhz.

Ainsi, et selon un principe similaire, considérer tous les scénarios de configuration possibles pour les dispositifs point d'accès sans fil 11, 12, 14, 16 et 18 du réseau local 1 revient à « parcourir » toutes les combinaisons possibles d'une bande fréquentielle configurable et d'une largeur de bande fréquentielle configurable de la pluralité de dispositifs point d'accès sans fil 11, 12, 14, 16 et 18.

Toujours selon le même raisonnement, considérer tous les scénarios de configuration faisant du sens pour les dispositifs point d'accès sans fil 11, 12, 14, 16 et 18 du réseau local 1 revient à « parcourir » toutes les combinaisons d'une bande fréquentielle et d'une largeur de bande fréquentielle de la pluralité de dispositifs point d'accès sans fil 11, 12, 14, 16 et 18 qui ne présentent pas un inconvénient majeur en termes de configuration, considéré comme rédhibitoire, et exclus des scénarios à comparer. Un tel scénario exclu est par exemple un scénario qui ne réponde pas à des critères prédéterminés, tel que, par exemple, deux dispositifs points d'accès sans fil voisins et à portée l'un de l'autre qui ne partagent pas un même canal primaire alors que le partage d'un même canal primaire est envisageable.

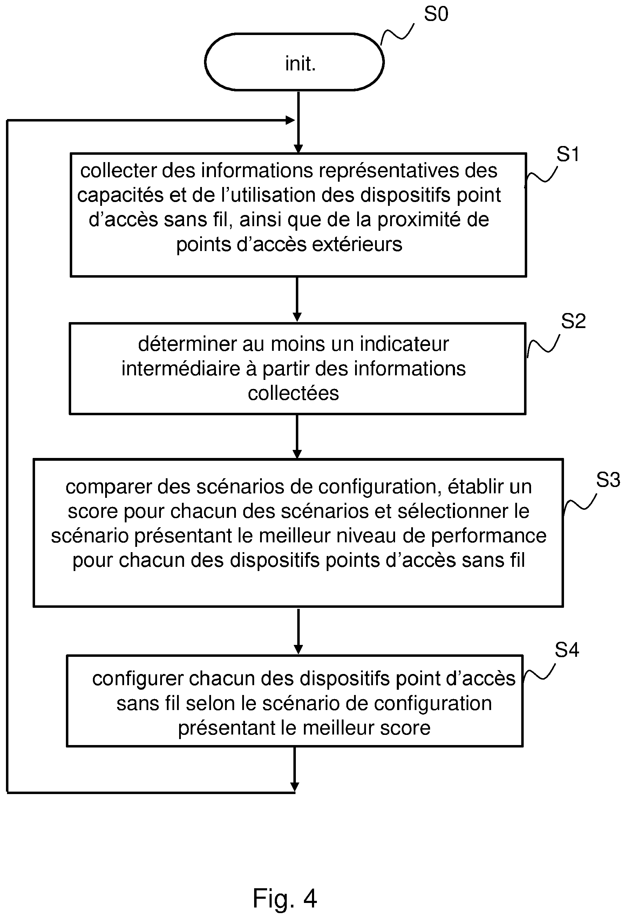

La **Fig. 4** illustre un procédé de configuration de dispositifs point d'accès sans fil selon un autre mode de réalisation de l'invention pour lequel le calcul d'un facteur de pondération AP_{PRIORITY} représentatif d'un niveau de priorité à attribuer en termes de bande passante et utilisé comme un indicateur intermédiaire éventuellement couplé à un ou plusieurs autres indicateurs intermédiaires. Selon ce mode de réalisation, l'étape d'initialisation **S0** et l'étape **S1** de collecte des premières, deuxièmes et troisièmes informations sont semblables à celles déjà décrites en rapport avec le procédé illustré sur la Fig.3.

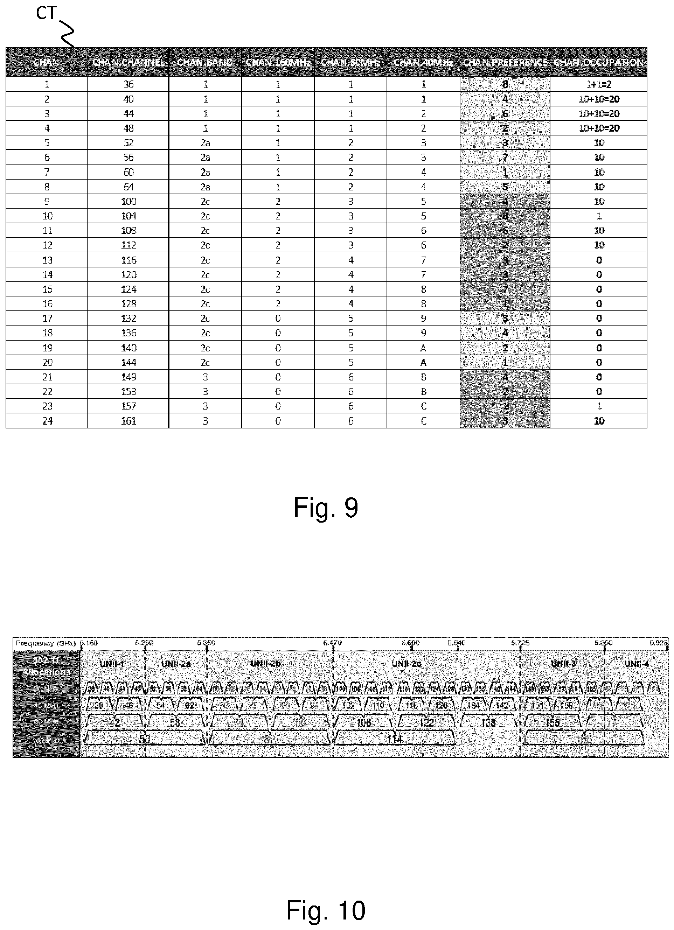

Selon un mode de réalisation préféré, trois indicateurs intermédiaires sont définis lors d'une étape **S2**, préalablement à l'attribution d'un score pour un scénario donné. Ces indicateurs intermédiaires sont un facteur de pondération AP_{PRIORITY} représentatif d'un niveau de priorité à attribuer en termes de bande passante à chacun des points d'accès sans fil 11, 12, 14, 16 et 18, établi tel que précédemment décrit, un indicateur d'occupation pour chacun des canaux élémentaires et pour un scénario donné établi au moyen d'une table CT de comparaison d'occupation des canaux élémentaires, ainsi qu'un indicateur de préférence de canal élémentaire visant à discriminer des canaux élémentaires présentant un même taux d'occupation théorique selon un scénario donné. Selon un mode de réalisation, un indicateur de préférence de canal est prédéfini pour chacun des canaux élémentaires de l'espace fréquentiel utilisable, de façon empirique ou arbitraire, en s'appuyant à la fois sur des considérations techniques et sur des usages majoritairement observés en termes d'attribution de canaux. La **Fig. 9** représente une table CT de comparaison de l'occupation de canaux élémentaires pour chacun des scénarios de configuration possibles de la pluralité de dispositifs point d'accès sans fil, en tenant compte, de surcroît, de la configuration détectée des dispositifs point d'accès sans fil tiers 193, 195 et 197. La table CT de comparaison d'occupation de canaux élémentaires comprend par exemple une première colonne intitulée « CHAN », laquelle comprend des identifiants 1 à 24 de bandes fréquentielles (canaux) élémentaires attribuables dans l'espace fréquentiel défini qui constitue le « médium physique » des communications sans fil opérées. Une seconde colonne intitulée « CHAN.CHANNEL » comprend des identifiants de bandes fréquentielles (canaux) élémentaires définis au regard de fréquences centrales. Ainsi les bandes fréquentielles illustrées sur la Fig.6 pour une largeur de bande fréquentielle de 20 Mhz sont comprises dans cette deuxième colonne. Une troisième colonne intitulée « CHAN.BAND » comprend un identifiant de bande fréquentielle (ou sous-bande) telle que définie normativement et permettant, par exemple de distinguer les sous-bandes UNII-1, UNII-2a, UNII 2c, UNII-3. Selon l'exemple décrit, la sous-bande UNII-2b n'est pas représentée car elle n'est pas utilisée. Des quatrième, cinquième et sixième colonnes respectivement intitulées « CHAN. 160MHz », « CHAN.80MHz » et « CHAN.40MHz » comprennent des identifiants de bandes fréquentielles attribuables en fonction de la largeur de bande fréquentielle sélectionnée. Ainsi, pour une largeur de bande fréquentielle de 160 MHz, deux sous-bandes complètes peuvent être sélectionnées par les dispositifs point d'accès sans fil, alors que pour une largeur de bande fréquentielle de 80 MHz, six sous-bandes complètes peuvent être sélectionnées par les dispositifs point d'accès sans fil, et enfin pour une largeur de bande fréquentielle de 40 MHz, douze sous-bandes complètes peuvent être sélectionnées par les dispositifs point d'accès sans fil (de 1 à C en hexadécimal). Il est à noter que la sous-bande identifiée par la valeur « 0 » dans la configuration (colonne « CHAN. 160MHz ») comprenant une largeur de bande fréquentielle égale à 160 MHz signifie que cette sous-bande n'est pas utilisable dans cette configuration, puisqu'elle ne présente pas une largeur suffisante de 160 MHz. C'est pourquoi deux sous-bandes seulement sont utilisables avec une largeur de bande fréquentielle de 160 MHz. Une septième colonne comprend les indicateurs de préférence de canal prédéfinis pour chacun des canaux élémentaires, visant à discriminer deux canaux élémentaires entre eux lorsque des taux d'occupation théoriques calculés sont identiques pour deux canaux élémentaires.

Les exemples de valeurs de taux d'occupation théoriques présentés dans la table de comparaison CT sur la Fig. 9 correspondent à une présence détectée de dispositifs point d'accès tiers à portée du réseau local 1, configurés comme suit :
- un premier point d'accès tiers opère sur le canal 36, avec une largeur de bande fréquentielle de 80 MHz,
- un deuxième point d'accès tiers opère sur le canal 36, avec une largeur de bande fréquentielle de 160 MHz,
- un troisième point d'accès tiers opère sur le canal 104, avec une largeur de bande fréquentielle de 80 MHz, et,
- un quatrième point d'accès tiers opère sur le canal 157, avec une largeur de bande fréquentielle de 40 MHz.

Astucieusement, lors d'une étape S3, la comparaison de chacun des scénarios de configuration à considérer revient à superposer chacune des configurations des dispositifs point d'accès sans fil 11, 12, 14, 16 et 18 ainsi que chacune des configurations détectées des dispositifs point d'accès sans fil 193, 195 et 197 et de définir ensuite un taux d'occupation théorique par bande fréquentielle (canal) élémentaire pour chacun des scénarios. Pour ce faire, il est par exemple défini conventionnellement des pondérations de taux d'occupation différentes selon que deux dispositifs points d'accès partagent ou non un même canal primaire. Par exemple, il peut être défini conventionnellement et de façon empirique un coefficient d'occupation de 1 pour un canal sélectionné comme étant le canal primaire et un coefficient d'occupation de 10 pour un canal sélectionné comme étant le ou un canal secondaire puisqu'un canal occupé par un canal secondaire est moins performant qu'un canal occupé par un canal primaire.

Toujours à l'étape S3, et une fois les taux d'occupation théoriques déterminés pour chacune des bandes fréquentielles élémentaires (ou canaux élémentaires), un score de performance de scénario peut être calculé.

Par exemple, un score de performance de scénario peut être établi pour chacun des scénarios considérés en additionnant la somme des *n* rapports ainsi définis pour les *n* dispositifs point d'accès sans fil du réseau local 1 :
(AP_{PRIORITY} x débit maximal théorique du canal en fonction du MCS maximal utilisable par le dispositif point d'accès sans fil, du nombre de flux de données maximal utilisable par le point d'accès sans fil et de la largeur de bande fréquentielle configurée pour le scénario considéré) / somme des taux d'occupation théoriques calculés pour les canaux élémentaires utilisés par le dispositif point d'accès sans fil. Le terme MCS (du sigle anglais « Modulation and Coding Scheme ») désigne ici un schéma de modulation et de codage utilisé par un dispositif point d'accès sans fil.

Selon l'exemple décrit, cinq termes sont alors additionnés pour obtenir le score d'un scénario puisque les dispositifs point d'accès sans fil 11, 12, 14 16 et 18 sont au nombre de cinq.

Lors d'une étape **S4**, le dispositif de configuration 100 procède à la configuration de tous les dispositifs point d'accès sans fil du réseau local 1 conformément au scénario présentant le meilleur score.

Avantageusement, le procédé de configuration optimisé peut être exécuté de façon récurrente, par exemple une fois par jour ou encore dès lors qu'il est détecté qu'un dispositif est ajouté au réseau local ou retiré du réseau local ou chaque fois qu'un dispositif tiers apparaît ou disparaît de la portée de l'un au moins des dispositifs point d'accès sans fil du réseau local 1.

Astucieusement, et selon le nombre de bandes fréquentielles élémentaires à considérer, il peut être défini un procédé implémenté de sorte que ce procédé comprenne un indice de parcours d'une pluralité de scénarios utilisant un codage hexadécimal comportant pour chacun des dispositifs point d'accès du réseau local 1 un sous-indice de parcours de bande fréquentielle et un sous-indice de parcours de largeur de bande fréquentielle, de sorte que le parcours d'une pluralité de scénarios à considérer et à comparer puisse être réalisé en incrémentant cette indice d'une unité.

Les termes sous-indice de parcours de bande fréquentielle et sous-indice de parcours de largeur de bande fréquentielle désignent respectivement ici des indices utilisés pour parcourir toutes les configurations possibles de bande fréquentielle utilisable (canal 36, ... canal 163) et toutes les configurations possibles de largeur de bande fréquentielle utilisable (20, 40, 80 et 160 MHz) L'avantage découlant d'une telle implémentation utilisant un tel indice est que cette forme d'indice s'adapte sans limite au nombre de dispositifs point d'accès présents dans le système. Ainsi chaque dispositif point d'accès est représenté par un nombre composé de deux éléments hexadécimaux dont un premier élément correspond au sous-indice de parcours de largeur de bande et un second élément correspond au sous-indice de parcours bande fréquentielle. L'utilisation astucieuse d'éléments hexadécimaux permet ainsi de coder, avec 1 seul élément (chiffre ou lettre), les sous-indices selon seize valeurs distinctes au lieu de dix en base 10. Ceci apparait particulièrement avantageux dans le cadre de la bande globale dite bande 5GHz qui comprend douze bandes fréquentielles pour une configuration de largeur de bande de 40 MHz. Ainsi l'indice de parcours peut désigner la totalité des configurations successives d'un ensemble de dispositifs point d'accès sans fil lorsque que les deux premiers éléments de l'indice correspondent à un premier dispositif point d'accès sans fil, des troisième et quatrième éléments de l'indice correspondent à un second dispositif point d'accès sans fil, et ainsi de suite.

La **Fig. 5** illustre schématiquement un exemple d'architecture interne du dispositif de configuration 100, encore communément appelé « Master » 100. On note que la Fig. 5 pourrait aussi illustrer schématiquement un exemple d'architecture matérielle du cœur numérique de la passerelle réseau 10 comprenant le dispositif de configuration 100, ou encore un exemple d'architecture matérielle d'un dispositif point d'accès sans fil parmi les dispositifs 11, 12, 14, 16 et 18, ou un exemple d'architecture d'une station connectée à un point d'accès sans fil.

Selon l'exemple d'architecture matérielle représenté à la Fig. 5, le dispositif de configuration 100 comprend alors, reliés par un bus de communication 110 : un processeur ou CPU (« Central Processing Unit » en anglais) 111 ; une mémoire vive RAM (« Random Access Memory » en anglais) 112 ; une mémoire morte ROM (« Read Only Memory » en anglais) 113 ; une unité de stockage telle qu'un disque dur (ou un lecteur de support de stockage, tel qu'un lecteur de cartes SD (« Secure Digital » en anglais) 114 ; au moins une interface de communication 115 permettant au dispositif de configuration 100 de communiquer avec des dispositifs présents dans le réseau de communication 1, tels que par exemple, les dispositifs point d'accès sans fil 11, 12, 14, 16 et 18.

Le processeur 111 est capable d'exécuter des instructions chargées dans la RAM 112 à partir de la ROM 113, d'une mémoire externe (non représentée), d'un support de stockage (tel qu'une carte SD), ou d'un réseau de communication. Lorsque le dispositif de configuration 100 est mis sous tension, le processeur 111 est capable de lire de la RAM 112 des instructions et de les exécuter. Ces instructions forment un programme d'ordinateur causant la mise en œuvre, par le processeur 111, d'une partie d'un procédé décrit en relation avec les Fig. 3 et Fig. 4.

Tout ou partie du procédé implémenté par le dispositif de configuration 100, ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif de configuration 100 comprend de la circuiterie électronique configurée pour mettre en œuvre le procédé décrit en relation avec lui-même ainsi qu'avec les dispositifs point d'accès sans fil 11, 12, 14, 16 et 18, et que tout autre dispositif impliqué dans l'exécution du procédé de configuration décrit. Bien évidemment, le dispositif de configuration 100 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

La **Fig.10** illustre l'ensemble des sous-bandes (ou bandes fréquentielles) comprises dans la bande fréquentielle dite « bande 5GHz » utilisable pour des communications sans fil. Les identifiants de bandes fréquentielles (ou canaux) qui apparaissent en grisé (bande UNII-2b, bande UNII-4 et certains canaux de la bande UNII-3) indiquent des canaux non utilisés (pour cause de restrictions ou de provisions). Selon un autre mode de réalisation la bande fréquentielle dite « 2,4 GHz » est utilisée. Selon un autre mode de réalisation encore, les bandes fréquentielles dites « 2,4 GHz » et « 5 GHz » sont toutes les deux utilisées.

L'invention ne se limite pas aux seuls modes de réalisation et exemples précédemment décrits mais concerne plus généralement tout procédé de configuration optimisée d'une pluralité de dispositifs point d'accès sans fil d'un réseau local ou dans une pluralité de réseaux locaux comprenant une collecte de premières informations représentatives de capacités d'utilisation des dispositifs point d'accès sans fil, une collecte de deuxièmes informations représentatives de l'utilisation ou de capacités d'utilisation de dispositifs électroniques connectés à l'un ou plusieurs des dispositifs point d'accès sans fil, une collecte de troisièmes informations représentatives d'une utilisation, par au moins un dispositif point d'accès sans fil extérieur au réseau de communication, d'une bande fréquentielle (un canal) de communication utilisable par l'un au moins des dispositifs point d'accès sans fil, puis la considération d'une pluralité de scénarios de configuration correspondant chacun à au moins une combinaison d'une bande fréquentielle et d'une largeur de bande fréquentielle et l'établissement d'un score théorique de performance pour chacun des scénarios considérés, établi au moins au regard desdites premières, deuxièmes et troisièmes informations, et finalement la configuration les dispositifs point d'accès sans fil conformément au scénario de configuration présentant le meilleur score de performance.

## Revendications

1. Procédé de configuration d'une pluralité de dispositifs point d'accès sans fil (11, 12, 14, 16, 18), exécuté par un dispositif de configuration (100), dans un réseau de communication (1), le procédé étant **caractérisé en ce qu'**il comprend :
- collecter des premières informations, représentatives de capacités de communication des dispositifs point d'accès sans fil déterminant le ou les standards et protocoles de communication sans fil supportés par chacun des dispositifs points d'accès sans fil parmi ladite pluralité de dispositifs points d'accès sans fil, et les possibilités de bandes fréquentielles et de largeur de bande fréquentielle utilisables par ces dispositifs,
- collecter des deuxièmes informations, représentatives de l'utilisation ou de capacités d'utilisation que font des dispositifs électroniques connectés à tout ou partie des dispositifs points d'accès sans fil des capacités de communications qui leurs sont allouées,
- collecter des troisièmes informations représentatives d'une utilisation, par au moins un dispositif point d'accès sans fil extérieur au réseau de communication, opérant à portée de l'un ou de plusieurs dispositifs points d'accès sans fil du réseau de communication (1), d'un canal de communication utilisable par l'un au moins des dispositifs point d'accès sans fil de ladite pluralité de dispositifs points d'accès sans fil,
- considérer une pluralité de scénarios de configuration, chacun des scénarios de configuration correspondant à une sélection, pour chacun des dispositifs point d'accès sans fil, d'une combinaison de bande fréquentielle et d'une largeur de bande fréquentielle,
- établir un score théorique représentatif de performance de communications pour chacun desdits scénarios de configuration considérés, le score étant établi au moins au regard desdites premières, deuxièmes et troisièmes informations, en fonction de critères prédéterminés, et,
- configurer les dispositifs point d'accès sans fil (11,12, 14, 16, 18) de la pluralité de dispositifs point d'accès sans fil conformément au scénario de configuration présentant le meilleur score de performance de communications.

2. Procédé de configuration selon la revendication 1, comprenant en outre :
déterminer, pour chacun des dispositifs point d'accès sans fil (11, 12, 14, 16, 18) de la pluralité de dispositifs point d'accès sans fil, un ou plusieurs indicateurs intermédiaires à partir de tout ou partie des premières, deuxièmes et troisièmes informations collectées, et dans lequel établir un score théorique de performance de communications pour chacun desdits scénarios de configuration considérés tient compte d'au moins un indicateur intermédiaire.

3. Procédé de configuration selon la revendication 2, dans lequel le ou les premiers indicateurs intermédiaires sont compris dans la liste : un indice de préférence de canal de communication, un taux d'occupation de canal de communication, un indice de priorité d'utilisation d'un dispositif point d'accès sans fil.

4. Procédé selon la revendication précédente, dans lequel considérer une pluralité de scénarios comprend une sélection d'un canal de communication qui comprend sélectionner un canal de communication primaire présentant l'indice de préférence le plus élevé parmi une pluralité de canaux présentant un taux d'occupation le plus faible.

5. Procédé selon l'une quelconque des revendications 3 et 4, dans lequel un taux d'occupation théorique est défini en utilisant des pondérations différentes selon que deux dispositifs point d'accès sans fil à portée l'un de l'autre partagent ou non un même canal de communication primaire.

6. Dispositif de configuration (100) d'une pluralité de dispositifs point d'accès sans fil (11, 12, 14, 16, 18), dans un réseau de communication, le dispositif de configuration étant **caractérisé en ce qu'**il comprend :
- un module de collecte de premières informations représentatives de capacités de communication des dispositifs point d'accès sans fil déterminant le ou les standards et protocoles de communication sans fil supportés par chacun des dispositifs points d'accès sans fil parmi ladite pluralité de dispositifs points d'accès sans fil, et les possibilités de bandes fréquentielles et de largeur de bande fréquentielle utilisables par ces dispositifs,
- un module de collecte de deuxièmes informations représentatives de l'utilisation que font des dispositifs électroniques connectés à tout ou partie des dispositifs points d'accès sans fil des capacités de communications qui leurs sont allouées,,
- un module de collecte de troisièmes informations représentatives d'une utilisation, par au moins un dispositif point d'accès sans fil extérieur au réseau de communication, opérant à portée de l'un ou de plusieurs dispositifs points d'accès sans fil du réseau de communication (1), d'un canal de communication utilisable par l'un au moins des dispositifs point d'accès sans fil de ladite pluralité de dispositifs points d'accès sans fil,
- un module pour comparer une pluralité de scénarios de configuration, chacun des scénarios de configuration correspondant à une sélection, pour chacun des dispositifs point d'accès sans fil, d'une combinaison de bande fréquentielle et d'une largeur de bande fréquentielle, et pour
- établir un score théorique représentatif de performance de communications pour chacun desdits scénarios de configuration considérés, le score étant établi au moins au regard desdites premières, deuxièmes et troisièmes informations, en fonction de critères prédéterminés, et,
- un module pour configurer les dispositifs point d'accès sans fil de la pluralité de dispositifs point d'accès sans fil conformément à son scénario de configuration présentant le meilleur score de performance de communications.

7. Equipement de communication de type passerelle réseau (10) ou serveur comprenant un dispositif de configuration (100) selon la revendication précédente.

8. Produit programme d'ordinateur **caractérisé en ce qu'**il comprend des instructions de codes de programme pour exécuter les étapes du procédé selon l'une quelconque des revendications 1 à 5, lorsque ledit programme est exécuté par un processeur.

9. Produit programme d'ordinateur selon la revendication précédente dans lequel le procédé comprend un indice de parcours d'une pluralité de scénarios, lequel indice utilise un codage hexadécimal d'un nombre de canaux de communication parcourus.

10. Support de stockage d'informations comprenant un produit programme d'ordinateur selon la revendication précédente.
